(19)

**Europäisches Patentamt**
**European Patent Office**
**Office européen des brevets**

(11)  **EP 1 564 235 B1**

(12)  **EUROPEAN PATENT SPECIFICATION**

(45) Date of publication and mention
of the grant of the patent:
**11.04.2007  Bulletin 2007/15**

(51) Int Cl.:
*C08G 63/16* *(2006.01)*   *B29C 49/00* *(2006.01)*

(21) Application number: **05003301.8**

(22) Date of filing: **16.02.2005**

(54) **Biodegradable film**

Bioabbaubarer Film

Film biodegradable

(84) Designated Contracting States:
**DE FR**

(30) Priority:  **16.02.2004  JP 2004037556**

(43) Date of publication of application:
**17.08.2005  Bulletin 2005/33**

(73) Proprietor: **NIPPON SHOKUBAI CO., LTD.**
**Osaka-shi, Osaka-fu 541 (JP)**

(72) Inventors:
• **Otome, Shigeo**
**Kyoto-shi**
**Kyoto (JP)**

• **Iwai, Kunihiro**
**Osaka-shi**
**Osaka (JP)**
• **Sohgawa, Yow-hei**
**Tondabayashi-shi**
**Osaka (JP)**

(74) Representative: **Müller-Boré & Partner**
**Patentanwälte**
**Grafinger Strasse 2**
**81671 München (DE)**

(56) References cited:
**EP-A- 0 647 668        EP-A- 0 710 685**
**US-A- 5 292 783        US-A- 5 504 148**

**Description**

Conventionally, as biodegradable resins, natural products, e.g., polysaccharides and sugars such as cellulose and starch, which have been modified, processed, or mixed with other plastic, polyhydroxyalkanoate synthesized by a microorganism, polycaprolactone, and polybuty lene succinate obtained by polycondensation of dicarboxylic acid and diol, and polylactic acid using lactic acid as a raw material have been known.

In addition, it has been proposed that these biodegradable resins are used in sheets or films utilizing the characteristics thereof and, in recent years, they are regarded as promising, as a means for solving pollution of soils, seas and rivers due to waste of plastics which are social problems. In particular, currently, as a major practical item, sheets and films using polylactic acid, polybutylene succinate, and polybutylene succinate adipate are provided.

However, there have not been found biodegradable films which have high transparency, and satisfy necessary flexibility and processibility for a film.

For example, polylactic acid is poor in flexibility, and is used in utility such as a packaging material with difficulty. Japanese unexamined patent application H09-272794 (1997) discloses a description that it is effective to blend with an aliphatic polyester other than polylactic acid in order to impart flexibility, thereby, inflation molding becomes possible. However, realization of both flexibility and transparency is not sufficient. In addition, polybutylene succinate representing a diol and dicarboxylic acid system is excellent in flexibility, but it has been previously considered that it is difficult to impart transparency thereto.

Polyethylene succinate is a resin having high oxygen gas barrier property which is one of advantageous properties taking film utility into consideration, and is excellent in biodegradability, but a film having transparency using polyethylene succinate as a raw material has not been obtained, as seen in International Publication Number WO1996/019521.

The present invention has been made in view of the aforementioned circumstances, and an object of the invention is to provide a biodegradable film which hardly pollutes the environment even when being discarded, and is excellent in transparency while satisfying adequate flexibility required in a film, and a process for producing a biodegradable film excellent in transparency.

In the present invention, a transparent biodegradable film is obtained from a resin component containing a polyethylene succinate-based polymer as an essential component, wherein a ratio of the polyethylene succinate-based polymer occupied in the resin composition is 30 to 100% by mass, and a relationship between a haze value and a film thickness satisfies the following inequality (1).

$$H/T < 0.55 \dots (1)$$

H: haze value (%), T: film thickness ($\mu$m)

In another aspect of the present invention, a process for producing a transparent biodegradable film comprises forming a resin composition containing 30 to 100% by mass of a polyethylene succinate-based polymer into a film at a molding temperature of 140°C to 200°C by an inflation method.

The biodegradable film of the present invention is a film excellent in transparency, and can be used in film utility requiring flexibility, heat sealability and gas barrier property, for example, in a packaging material. Further, since the biodegradable film can be degraded and vanished under natural environment such as in soils after use, it can be used as one solution for environmental pollution due to plastic waste.

The present invention relates to a transparent biodegradable film obtained from a resin composition containing a polyethylene succinate-based polymer as an essential component, wherein a relationship between a haze value which is an index of transparency, and a film thickness satisfies the following inequality (1).

$$H/T < 0.55 \dots (1)$$

H: haze value (%), T: film thickness ($\mu$m)

A haze value represented by H in the inequality (1) is a value obtained according to JIS K7136 and, by satisfying the inequality (1), transparent feeling is obtained. More preferably, H/T of the resulting film is less than 0.5 and, further preferably less than 0.45.

In addition, haze is defined as a ratio of diffusion transmittance relative to total light transmittance. When high visibility of the content is required during use of the resulting film, total light transmittance is preferably 70% or more, more preferably 80% or more, most preferably 90% or more.

It is necessary that the biodegradable film of the present invention has biodegradability in activated sludge, compost or embedment in soil, that is, it is utilized by microorganism or bacteria present in soils or sludge. In the film, a biodegradation degree which is confirmed by a test by any test method of ISO14851; JIS K6950, ISO14852; JIS K6951, ISO14855; JIS K6953, a biodegradability test (MITI method) of the Chemical Substances Control Law is preferably 30% or more, further preferably 60% or more. It is most preferable that biodegradability is also confirmed under anaerobic condition of ISO15985.

A thickness of the film of the present invention is preferably 200 $\mu$m or less, further preferably 100 $\mu$m or less, most preferably 50 $\mu$m or less.

The polyethylene succinate-based polymer represents a polyethylene succinate and a copolymer thereof. Examples of a copolymerization component include dicarboxylic acid, diol, polyether polyol, hydroxycarboxylic acid, a compound having at least three functional groups which provide an ester such as hydroxyl group or carboxyl group, a sulfonate compound, natural amino acid, polyamide and the like.

From a viewpoint of oxygen gas barrier property and crystallization, an ethylene succinate unit is preferably 50% by mass or more, further preferably 70% by mass or more, most preferably 90% by mass or more.

The polyethylene succinate-based polymer may be linear, or may contain a branched structure. Additionally, a chain of the polymer may be elongated with a coupling agent such as diisocyanate.

Examples of other dicarboxylic acid as a copolymerization component may include saturated aliphatic carboxylic acid such as oxalic acid, malonic acid, adipic acid, azelaic acid and sebacic acid, and an ester derivative thereof (e.g., alkyl ester; a carbon number of an alkyl part is preferably 1 to 6), unsaturated aliphatic carboxylic acid such as fumaric acid and maleic acid, and an ester derivative thereof (e.g., alkyl ester; a carbon number of an alkyl part is preferably 1 to 6), and aromatic dicarboxylic acid such as orthophthalic acid, isophthalic acid, terephthalic acid and naphthalenedicarboxylic acid, and an ester derivative thereof (e.g., alkyl ester; a carbon number of an alkyl part is preferably 1 to 6).

Examples of the diol may include alkanediol having 3 to 6 carbon atoms, and cycloalkanediol having 5 to 8 carbon atoms, for example, 1,2-and 1,3-propane diol, 1,2- and 1,4-buthanediol 1,5-pentanediol, 1,6-hexanediol, cyclopentanediol, cyclohexanediol, 1,2-cyclohexanedimethanol and 1,4-cyclohexanedimethanol and the like.

Examples of the polyether polyol may include diethylene glycol, triethylene glycol, polyethylene glycol, polypropylene glycol, polytetramethylene glycol, and a copolymer thereof.

As the hydroxycarboxylic acid, glycolic acid, D-, L- or D,L-lactic acid, 6-hydroxyhexanoic acid, and a cyclic derivative thereof are used, and specific examples thereof may include glycolide (1,4-dioxane-2,5-dione), D- or L-dilactide (3,6-dimethyl-1,4-dioxane-2,5-dione), p-hydroxybenzoic acid and an oligomer and a polymer thereof, for example, poly-3-hydroxybutyric acid, polyhydroxyvaleric acid and polylactide.

Examples of the compound having at least three functional groups which provide an ester may include tartaric acid, citric acid, malic acid, itaconic acid, trimethylolpropane, trimethylolethane, pentaerythritol, polyether triol, glycerol, trimesic acid, trimellitic acid or an anhydride thereof, pyromellitic acid or a dianhydride thereof, and hydroxyisophthalic acid, and a mixture thereof. In this regard, when gelling in a reaction of a polyethylenesuccinate-based polymer, as well as fish eye, and reduction in elongation and impact of a film are taken into consideration, a content of the compound having three functional groups which provide an ester is preferably 0.5 mole or less, further preferably 0.4 mole or less, most preferably 0.3 mole or less relative to 100 mole of a total dicarboxylic acid component in a polyethylene succinate-based polymer, and a content of a compound having four functional groups which provide an ester is preferably 0.4 mole or less, further preferably 0.3 mole or less, most preferably 0.25 mole or less relative to 100 mole of a dicarboxylic acid component.

Examples of the sulfonate compound may include an alkali metal salt or an alkaline earth metal salt of dicarboxylic acid containing a sulfonate group, and an ester-forming derivative thereof.

Examples of the natural amino acid may include glycine, aspartic acid, glutamic acid, alanine, valine, leucine, isoleucine, tryptophan, and phenylalanine, as well as an oligomer and a polymer obtained therefrom, for example, polyaspartic acid imide and polyglutamic acid imide, preferably glycine.

Examples of the polyamide may include polyamides obtained by polycondensing diamine having 4 to 10 carbon atoms, such as tetramethylenediamine, pentamethylenediamine, hexamethylenediamine, heptamethylenediamine, octamethylenediamine, nonamethylenediamine and decamethylenediamine, succinic acid, dicarboxylic acid having 4 to 6 carbon atoms or the aforementioned dicarboxylic acid.

A method of synthesizing a polyethylene succinate-based polymer is not particularly limited, but the polymer is obtained by (i) a method of polycondensing polybasic acid (or ester thereof) and glycol, (ii) a method of ring opening-polymerizing cyclic acid anhydride and cyclic ether, or (iii) a method of transesterifying separately synthesized or recovered different resins. A polycondensation reaction may be according to a normal transesterification method, or an esterification method, or combination use of both of them. In addition, in order to obtain a higher molecular weight, further deglycolation reaction may be performed by any method.

A vertical reactor, a batch reactor, a horizontal reactor, and a biaxial extruder are used in a reaction, and a reaction is performed in a bulk or a solution.

Examples of an esterification catalyst, a ring opening polymerization catalyst and a deglycolation catalyst may include a metal such as lithium, sodium, potassium, cesium, magnesium, calcium, barium, strontium, zinc, aluminum, titanium, cobalt, germanium, tin, lead, antimony, cadmium, manganese, iron, zirconium, vanadium, iridium, lanthanum, and selenium, and an organometallic compound, a salt of an organic acid, metal alkoxide, and metal oxide thereof. If necessary, a promoter such as phosphoric acid may be used together. These catalysts may be used alone, or in combination of two or more, and an addition amount is preferably 1.0 mole or less, more preferably 0.8 mole or less, further preferably 0.6 mole or less relative to 100 mole of total dicarboxylic acid.

Further, the polyethylene succinate-based polymer obtained by the aforementioned synthesis method may be converted into a polymer having a higher molecular weight using a chain extender, if necessary. Examples of the chain extender may include an isocyanate compound, an epoxy compound, an aziridine compound and an oxazoline compound which are di- or more-functional, as well as polyvalent metal compound, multifunctional acid anhydride, phosphoric acid ester, and phosphorous acid ester. These may be used alone, or in combination of two or more.

As the di- or more-functional isocyanate compound, tolylene 2,4-diisocyanate, tolylene 2,6-diisocyanate, 4,4'- and 2,4'-diphenylmethane diisocyanate, naphthalene 1,5-diisocyanate, xylylene diisocyanate, hexylmethylene diisocyanate, isophorone diisocyanate and methylenebis(4-isocyanatocyclohexane) are used, preferably, hexamethylenediisocyanate is used. In principle, it is possible to use isocyanurate having tri- or more functionality and/or trifunctional isocyanate optionally having a biuret group, or partially exchange a diisocyanate compound with tri- or polyisocyanate.

Examples of the di- or more-functional epoxy compound may include compounds having at least two epoxy groups in a molecule, for example, (poly)ethylene glycol diglycidyl ether, (poly)propylene glycol diglycidyl ether, polytetramethylene glycol diglycidyl ether, resorcine diglycidyl ether, neopentyl glycol diglycidyl ether, 1,6-hexanediol diglycidyl ether, adipic acid diglycidyl ester, o-phthalic acid diglycidyl ester, terephthalic acid diglycidyl ester, hydroquinone diglycidyl ether, bisphenol S diglycidyl ether, glycerol diglycidyl ether, sorbitol polyglycidyl ether, sorbitan polyglycidyl ether, polyglycerol polyglycidyl ether, pentaerythritol polyglycidyl ether, diglycerol polyglycidyl ether, triglycidyl tris(2-hydroxyethyl) isocyanurate, glycerol triglycidyl ether, and triemethylolpropane polyglycidyl ether.

Examples of the di- or more-functional aziridine compound may include 2,2'-bishydroxymethylbutanol-tris[3-(1-aziridinyl)propionate], ethylene glycol-bis[3-(1-aziridinyl)propionate], polyethylene glycol-bis[3-(1-aziridinyl)propionate], propylene glycol-bis[3-(1-aziridinyl)propionate], polypropylene glycol-bis[3-(1-aziridinyl)propionate], tetramethylene glycol-bis[3-(1-aziridinyl)propionate], polytetramethylene glycol-bis[3-(1-aziridinyl)propionate], N,N'-tetramethylenebisethyleneurea, N,N'-pentamethylenebisethyleneurea, N,N'-hexamethylenebisethyleneurea, N,N'-heptamethylenebisethyleneurea, N,N'-octamethylenebisethyleneurea, N,N'-phenylenebisethyleneurea, N,N'-tolylenebisethyleneurea, N,N'-diphenyl-4,4'-bisethyleneurea, 3,3'-dimethyldiphenyl 4,4'-bisethyleneuera, 3,3'-dimethoxydiphenyl 4,4'-bisethyleneurea, diphenylmethane 4,4'-bisethyleneurea and the like. These may be used alone, or two or more kinds of them may be used.

Examples of the di- or more-functional oxazoline compound may include 2-oxazoline, 2-methyl-2-oxazoline, 2-ethyl-2-oxazoline, 2-isopropyl-2-oxazoline, 2-butyl-2-oxazoline, 2-phenyl-2-oxazoline, 2,2'-bis(2-oxazoline), 2,2'-methylene-bis-(2-oxazoline), 2,2'-ethylene-bis-(2-oxazoline), 2,2'-triemthylene-bis-(2-oxazoline), 2,2'-tetramethylene-bis-(2-oxazoline), 2,2'-hexamethylene-bis-(2-oxazoline), 2,2'-octamethylene-bis-(2-oxazoline), 2,2'-ethylene-bis-(4,4'-dimethyl-2-oxazoline), 2,2'-p-phenylene-bis-(2-oxazoline), 2,2'-m-phenylene-bis-(2-oxazoline), 2,2'-m-phenylene-bis-(4,4'-dimethyl-2-oxazoline), bis-(2-oxazolinylcyclohexane) sulfide, bis-(2-oxazolinylnorbornane) sulfide and the like. One kind or two or more kinds from them may be used. Further preferably are 2,2'-m-phenylene-bis-(2-oxazoline), and bis-(2-oxazolinylnorbornane) sulfide.

The resin component used in the present invention contains a polyethylene succinate-based polymer as an essential component, and may be one or more kinds of other biodegradable resins as far as the effect of the present invention is not deteriorated. From a viewpoint of oxygen gas barrier property, a content of the polyethylene succinate-based polymer is preferably 30% by mass or more, more preferably 50% by mass or more, most preferably 70% by mass or more, and a content of other biodegradable resin is preferably 70% by mass or less, more preferably 50% by mass or less, most preferably 30% by mass or less.

A structure of the biodegradable film of the present invention is not particularly limited and, when the biodegradable film of the present invention contains the aforementioned biodegradable resin, it is enough that a ratio of the polyethylene succinate-polymer and other biodegradable resin in the biodegradable film falls within the aforementioned range. For example, the film may be a film comprising a composition obtained by blending the polyethylene succinate-based polymer and other biodegradable resin, or a laminated film obtained by laminating films comprising respective resins. Further, in the case of the laminated film, a laminated structure of the biodegradable film may be any one of a structure in which a film comprising a composition obtained by blending the polyethylene succinate-based polymer and other biodegradable resin, and a film comprising the polyethylene succinate-based polymer are laminated, and a structure in which a film comprising a composition obtained by blending the polyethylene succinate-based polymer and other biodegradable resin, and a film comprising other biodegradable resin are laminated.

Example of aforementioned other degradable resin may include a biodegradable resin containing an aliphatic polyester or an aromatic dicarboxylic acid as a constitutional unit, a natural biodegradable resin and the like.

Examples of the aliphatic polyester may include polybutylene succinate, polybutylene succinate adipate, polyhexamethylene succinate, polyethylene adipate, polyhexamethylene adipate, polybutylene adipate, polyethylene oxalate, polybutylene oxalate, polyneopentyl oxalate, polyethylene sebacate, polybutylene sebacate, polyhexamethylene sebacate, poly($\alpha$-hydroxyacid) such as polyglycolic acid and polylactic acid, poly($\omega$-hydroxyalkanoate) such as poly($\varepsilon$-caprolactone) and poly($\beta$-propiolactone), poly($\beta$-hydroxyalkanoate) such as poly(3-hydroxybutyrate), poly(3-hydroxyvalerate), poly(3-hydroxycaprolate), poly(3-hydroxyheptanoate), poly(3-hydroxyoctanoate), poly(4-hydroxybutyrate), and a copolymer thereof.

Examples of the biodegradable resin containing an aromatic dicarboxylic acid as a constitutional unit may include polyethylene succinate terephthalate, polybutylene succinate terephthalate, polybutylene adipate terephthalate, and polybutylene succinate adipate terephthalate and the like, and Ecoflex manufactured by BASF Ltd., EasterBio manufactured by Eastman Chemical Industries Co., Ltd., and Biomax manufactured by DuPont Inc.

Examples of the natural biodegradable resin may include denatured starch, modified starch, cellulose, modified cellulose, cellulose acetate, chitosan and the like.

If necessary, other components such as a crystal nucleus agent, a pigment, a dye, a heat resistant agent, an antioxidant, a weather resistant agent, a lubricant, an anti-blocking agent, a slip agent, an antistatic agent, a stabilizer, a filler, a reinforcing material, a flame-retardant, a plasticizer, an antibacterial agent, and other non-biodegradable other polymer may be added to the biodegradable film of the invention in such a range that the effect of the present invention is not deteriorated.

A tensile elastic modulus of the biodegradable film of the present invention is preferably 100 kgf/mm$^2$ (98 MPa) or less, more preferably 80 kgf/mm$^2$ or less, further preferably 60 kgf/mm$^2$ or less, preferably 10 kgf/mm$^2$ or more, more preferably 15 kgf/mm$^2$ or more, further preferably 20 kgf/mm$^2$ or more. By making a tensile elastic modulus of the film 100 kgf/mm$^2$ or less, flexibility of the film is obtained. On the other hand, when a tensile elastic modulus is less than 10 kgf/mm$^2$, there is a tendency that the film is easily elongated, and this becomes difficulty from a viewpoint of handling property, in some cases.

In addition, a tensile elongation is preferably 200% or more, more preferably 300% or more, further preferably 400% or more. By making a tensile elongation 200% or more, breakage to various stresses becomes difficult to occur, and this is preferable from a viewpoint of film property.

The tensile elastic modulus and tensile elongation are both a value measured according to the provision of JIS K-7127 (test method of plastic-tensile property).

In the biodegradable film of the present invention, a value of a coefficient obtained by converting oxygen permeability obtained according to JIS K7126 A method (differential pressure method) into a value per unit thickness is preferably 10 cm$^3\cdot$ mm/m$^2\cdot$ 24hrs$\cdot$ atm or less (1 atm = 1.01325 $\times$ 10$^5$ Pa), more preferably 5 cm$^3\cdot$ mm/m$^2\cdot$ 24hrs$\cdot$ atm or less, most preferably 3 cm$^3\cdot$ mm/m$^2\cdot$ 24hrs$\cdot$ atm or less. By making the value 10 cm$^3\cdot$ mm/m$^2\cdot$ 24hrs$\cdot$ atm or less, permeability of a gas, and permeation and diffusion of a smell are reduced, and usefulness as a film is increased.

Further, the inventors of the present invention found out a process for suitably producing a biodegradable film excellent in transparency- The invention relates to a process for producing a transparent biodegradable film satisfying the following inequality (1), wherein a weight average molecular weight of the polyethylene succinate-based polymer is 180000 to 400000, a ratio occupied in the resin composition is 30 to 100% by mass, and the film is formed by an inflation method at a molding temperature of 140°C to 200°C.

$$H/T < 0.55 \ldots (1)$$

H: haze value (%), T: film thickness ($\mu$m)

Inflation molding is a method of molding a film by extruding a melted resin on a cylinder through a circular die lip having a constant gap (lip gap) with a monoaxial extruder, inflating the interior of the cylinder with an air pressure, cooling and solidifying the melted resin with a cooling ring called air ring, and winding a film with two rolls called nip roll while the air was shut out, and this is a molding method which is widely used upon producing a shopping bag or a trash bag with polyethylene.

In inflation molding, the known molding machine which has conventionally used in LDPE, HDPE and LLDPE is used, and a lip gap is not particularly limited, but is 0.4 mm to 5 mm, preferably 0.6 mm to 4 mm, more preferably 0.8 mm to 3 mm. A blow-up ratio is 1 to 5, preferably 2 to 4. A winding rate is not particularly limited, but winding is performed usually at a rate of 4 m/min to 40 m/min. A blow-up ratio means a ratio of a circumference of the resulting cylindrical film relative a circumference of a die lip.

From a viewpoint of increase in transparency, it is preferable that a cooling wind from an air ring is cooled with a facility such as a chiller, to lower a temperature from room temperature to a lower temperature. Further, a process of closing the cylindrical film with nip roll, blowing up the cylindrical film like a balloon utilizing a space between two rolls, and winding a film is easily performed, in order to improve openability of a cylindrical film which has been folded into two, being more preferable.

A molding temperature is 200°C or less, preferably 180°C or less, more preferably 160°C or less. In addition, a lower limit of a molding temperature is 140°C, preferably 145°C or more, more preferably 150°C or more. By setting a molding temperature to an upper limit value or less, a melt viscosity of a resin, and an elongation viscosity are sufficiently obtained, and stability of a film is obtained. In addition, by setting a molding temperature to a lower limit value or more, transparency of a film is obtained.

In order to obtain a film having high transparency, cooling of a film at formation of a film is important. Therefore, a rate of cooling a film at film formation is preferably 25°C/sec or more, more preferably 30°C/sec or more, further preferably 35°C/sec or more. At a higher cooling rate, stability of film formation and transparency of a film are easily obtained. In order to enhance cooling effect, for example, it is preferably to install two or more air rings. The aforementioned cooling rate means a rate of cooling a surface temperature of a film from a molding temperature to 90°C.

The process for producing the biodegradable film of the present invention is attained by inclusion of 30 to 100% by mass of a polyethylene succinate-based polymer. By inclusion of 30% by mass or more of a polyethylene succinate-based polymer, moldability is improved while maintaining adequate flexibility and transparency of a film, being preferable.

A lower limit value of a weight average molecular weight of a polyethylene succinate-based polymer is preferably 180000, more preferably 200000, further preferably 220000. In addition, an upper limit value is preferably 400000, more preferably 350000, further preferably 300000. And a melt flow index (MFR) value of a polyethylene succinate-based polymer measured under condition of 190°C and 2.16 kg load is preferably 0.1 to 10, more preferably 0.8 to 8, most preferably 1 to 6. When a weight average molecular weight is 180000 or less, since a melt viscosity and an elongation viscosity of a resin are low, and stability of film forming at inflation molding is insufficient, consequently, it becomes necessary to lower a molding temperature of less than 140°C, and it would be difficult to obtain transparency. When a weight average molecular weight exceeds 400000, a melt viscosity becomes too high, and extrusion from a screw becomes difficult, and smoothness of a film would be deteriorated. From these reasons, transparency of a film tends to be deteriorated and, consequently, a high molding temperature becomes necessary. However, molding at a high temperature causes a problem such as blocking of a film, and deterioration and coloring of a resin due to a high temperature.

The reason why a film having high transparency is obtained by the process of the present invention is presumed to be based on total balance of adequate melt viscosity and cooling rate in addition to properties inherent to a polyethylene succinate-based polymer.

Hereinafter, the present invention will be described in detail by way of examples; however, the scope of the invention is not limited to these examples. Evaluation methods performed in the examples are as follows.

[Molecular weight]

A weight-average molecular weight was measured using gel permeation chromatography (GPC), using polystyrene as a standard substance.

[Haze value of film]

The haze value was measured with NDH 300A manufactured by Nippon Denshoku Industries Co., Ltd. under condition of a temperature of 23°C and a relative humidity of 55% according to JIS K7136.

[Tensile elastic modulus and tensile elongation of film]

These were measured by pulling a film cut into a rectangle test piece having a width of 15 mm and length of 100mm, with a universal tester manufactured by Instron Corp. at a tensile rate of 500 mm/min and a span of 50 mm under condition of a temperature of 23°C and a relative humidity of 55%.

[Oxygen permeability]

Oxygen permeability was measured using a GTR measuring apparatus, M-C3, manufactured by Toyo Seiki Seisaku-Sho, Ltd. by a differential pressure method according to the provision of JIS K-7126. Table 2 shows values obtained by converting the resulting values into values per 1 mm film thickness.

Example 1

Polycondensation and deglycolation reaction were performed at a mole ratio of ethylene glycol, succinic acid, and trimethylolpropane of 103, 100, and 0.2, and a polyethylene succinate-based polymer (resin A) of a weight average molecular weight of 240000, and a MFR value of 4.7 (190°C, 2.16 kg), which had been chain-extended with hexamethylene diisocyanate was obtained. And the resin A was used to perform film molding with an inflation molding machine for LDPE having a die lip diameter of 150 mm and a lip gap of 2 mm. A molding temperature was 150°C, a blow-up ratio was 1.9, a film winding rate was 21.4 m/min, and a film having a thickness of 25 $\mu$m was obtained.

The resulting film had high transparent feeling, and a haze value was 9.4, and whole light transmittance was 91.5%. This film was easily heat-sealed with a simple heat sealer (Poly Sealer 301E type manufactured by Fuji Impulse Co., Ltd.). The film had flexibility, and an elastic modulus was 51.6 kgf/mm$^2$ and 45.6 kgf/mm$^2$, respectively, in MD (machine direction: flow direction in film molding) and TD (traverse direction: direction vertical to flow direction in film molding), and a tensile elongation was 274% and 506%, respectively, in MD and TD. Molding condition and evaluation results are shown in Tables 1 and Table 2.

Example 2

According to the same manner as that of Example 1 except that a winding rate was 11.3 m/min, a film of a thickness of 50 $\mu$m having transparent feeling was obtained, and the same evaluation as that of Example 1 was performed.

Since a haze value of the resulting film is 15.6, a value of H/T is 0.31. Whole light transmittance was 90.7%. Molding conditions and evaluation results are shown in Table 1 and Table 2.

Example 3

Polycondensation and deglycolation reaction were performed at a mole ratio of ethylene glycol, succicic acid, and trimethylol propane of 103, 100, and 0.2, respectively, and a polyethylene succinate-based polymer (resin B) of a weight average molecular weight of 227000 and a MFR value of 6.9 (190°C, 2.16 kg), which had been chain-extended with hexamethylene diisocyanate was obtained. And the resin B was used to perform film molding with an inflation molding machine for LLDPE having a die diameter of 100 mm and a lip of 3 mm. A molding temperature was 160°C, a blow ratio was 2.2, and a winding rate was 21 m/min, and a film having a thickness of 21 $\mu$m was obtained.

The resulting film has high transparent feeling, and since a haze value is 10.8, a value of H/T is 0.51. In addition, whole light transmittance was 90.9%. This film was easily heat-sealed with a simple heat sealer (Poly Sealer 301E type manufactured by Fuji Impulse Co., Ltd.). The film had flexibility, and an elastic modulus was 50.1 kgf/mm$^2$ and 43 kgf/mm$^2$, respectively, in MD and TD, and a tensile elongation was 351% and 509%, respectively, in MD and TD. Molding conditions and evaluation results are shown in Tales 1 and 2.

Example 4

A resin composition (resin C) obtained by blending the polyethylene succinate-based polymer (resin A) used in Example 1 and polybutylene adipate terephthalate (Ecoflex® FBX7011 manufactured by BASF Ltd.) at a mass ratio of 80: 20. And the resin C was molded into a film with an inflation molding machine for LDPE having a die diameter of 150 mm and a lip of 2 mm. A molding temperature was 150°C, a blow ratio was 2.3, a winding rate was 19 m/min, and a film having a thickness of 25 $\mu$m was obtained.

The resulting film had high transparent feeling, and since a haze value is 9.1, a value of H/T is 0.36. In addition, whole light transmittance was 90.1%. This film was easily heat-sealed with a simple heat sealer (Poly Sealer 301E type manufactured by Fuji Impulse Co., Ltd.). The film had flexibility, an elastic modulus was 41 kgf/mm$^2$ and 39 kgf/mm$^2$, respectively, in MD and TD, and a tensile elongation was 366% and 560%, respectively, in MD and TD. Molding conditions and evaluation results are shown in Table 1 and Table 2.

Example 5

A resin composition (resin D) obtained by blending the polyethylene succinate-based polymer (resin A) used in Example 1 and polybutylene adipate terephthalate (Ecoflex® FBX7011 manufactured by BASF Ltd.) at a mass ratio of 30: 70. And the resin D was molded into a film with an inflation molding machine for LDPE having a die diameter of 150 mm and a lip of 2 mm. A molding temperature was 140°C, a blow ratio was 2.2, a winding rate was 20 m/min, and a film having a thickness 20 $\mu$m was obtained.

The resulting film had high transparency feeling, and since a haze value is 9.2, a value of H/T is 0.46. In addition, whole light transmittance was 91%. This film was easily heat-sealed with a simple heat sealer (Poly Sealer 301E type manufactured by Fuji Impulse Co., Ltd.). The film had flexibility, and an elastic modulus was 17.4 kgf/mm$^2$ and 16.3 kgf/mm$^2$, respectively, in MD and TD, and a tensile elongation was 520% and 564%, respectively, in MD and TD. Molding conditions and assessment results are shown in Tables 1 and 2.

Comparative Example 1

According to the same manner as that of Example 1 except that a molding temperature was 130°C, the polyethylene succinate-based polymer (resin A) used in Example 1 was used to perform film molding, to obtain a film having a thickness of 25 $\mu$m.
The resulting film had insufficient transparent feeling, and since a haze value is 15.6, a value of H/T is 0.65. Molding conditions and evaluation results are shown in Tables 1 and 2.

Comparative Example 2

When a haze value of a biaxially-stretched polylactic acid film having a thickness of 20 $\mu$m was measured, it was found to be 1.3, and this is very high transparent feeling, but the film had no flexibility. When an elastic modulus was measured, it was 950 kgf/mm$^2$ and 1070 kgf/mm$^2$, respectively, in MD and TD, and a tensile elongation was 103% and 82%, respectively, in MD and TD.

Comparative Example 3

According to the same manner as that of Example 3 except that polybutylene succinate (trade name: BIONOLE #1001, resin E, manufactured by Showa Highpolymer Co., Ltd.) was used, film molding was performed to obtain a film having thickness of 21 $\mu$m.
The resulting film had insufficient transparent feeling, and since a haze value is 18.6, a value of H/T is 0.89. Molding condition and evaluation results are shown in Tables 1 and 2.

Comparative Example 4

According to the same manner as that of Example 3 except that polybutylene succinate adipate (trade name: BIONOLE #3001, resin F, manufactured by Showa Highpolymer Co., Ltd.) was used, film molding was performed to obtain a film having thickness of 21 $\mu$m.
The resulting film had insufficient transparent feeling, and since a haze value is 13.3, a value of H/T is 0.63. Molding conditions and evaluation are shown in Tables 1 and 2.

Comparative Example 5

The resin composition (resin G) was prepared by blending the polyethylene succinate-based polymer (resin A) and polybutylene adipate terephthalate (trade name: ECOFLEX FBX7011 manufactured by BASF Ltd.) at a weight ratio of 20:80. A film was formed using the same molding machine as that of Example 5. A molding temperature was 150°C, a blow ratio was 2.2, a winding rate was 20.5 m/min, and a film having a thickness of 19 $\mu$m was obtained.
Since a haze value of the resulting film is 8.9, a value of H/T is 0.47 and, when an elastic modulus of the film was measured, it was 9.4 kgf/mm and 11.2 kgf/mm$^2$, respectively, in MD and TD, and the film had no drape. A tensile elongation was 391% and 364%, respectively, in MD and TD.

Table 1

|  | Resin | Molding conditions | | | | |
| --- | --- | --- | --- | --- | --- | --- |
|  |  | Lip (mm) | Die diameter (mm) | Molding temperature (°C) | Blow ratio | Winding rate (m/min) |
| Example 1 | Resin A | 2 | 160 | 150 | 1.9 | 21.4 |
| Example 2 | Resin A | 2 | 160 | 150 | 1.9 | 11.3 |
| Example 3 | Resin B | 3 | 100 | 160 | 2.2 | 21.0 |
| Example 4 | Resin C | 2 | 150 | 160 | 2.5 | 20.0 |
| Example 5 | Resin D | 3 | 100 | 140 | 2.2 | 20.0 |
| Comparative Example 1 | Resin A | 2 | 160 | 130 | 1.9 | 21.0 |

(continued)

| | Resin | Molding conditions | | | | |
|---|---|---|---|---|---|---|
| | | Lip (mm) | Die diameter (mm) | Molding temperature (°C) | Blow ratio | Winding rate (m/min) |
| Comparative Example 2 | - | - | - | - | - | - |
| Comparative Example 3 | Resin E | 3 | 100 | 160 | 2.2 | 21.0 |
| Comparative Example 4 | Resin F | 3 | 100 | 160 | 2.2 | 21.0 |
| Comparative Example 5 | Resin G | 3 | 100 | 160 | 2.2 | 20.5 |

Table 2

| | Resin | Molding temperature (°C) | Tensile elastic modulus | | Tensile elongation | | Transparency | | | Oxygen permeability |
|---|---|---|---|---|---|---|---|---|---|---|
| | | | MD (kgf/mm$^2$) | TD (kgf/mm$^2$) | MD (%) | TD (%) | Haze (%) | Thickness ($\mu$m) | H/T | |
| Example 1 | Resin A | 160 | 51.6 | 45.6 | 274 | 506 | 9.4 | 25 | 0.38 | 2.1 |
| Example 2 | Resin A | 150 | 37.3 | 45.4 | 351 | 681 | 15.6 | 60 | 0.31 | 2.0 |
| Example 3 | Resin B | 160 | 50.1 | 43 | 361 | 609 | 10.8 | 21 | 0.51 | 2.2 |
| Example 4 | Resin C | 160 | 41 | 39 | 366 | 560 | 9.1 | 25 | 0.36 | 3.6 |
| Example 5 | Resin D | 140 | 17.4 | 16.3 | 520 | 664 | 9.2 | 20 | 0.46 | 6.1 |
| Comparative Example 1 | Resin A | 130 | 52.1 | 50.6 | 340 | 620 | 51.6 | 25 | 0.02 | 2.0 |
| Comparative Example 2 | - | - | 950 | 1070 | 103 | 82 | 1.3 | 20 | 0.065 | 15 |
| Comparative Example 3 | Resin E | 160 | 61.3 | 82.1 | 362 | 252 | 18.6 | 21 | 0.89 | 10 |
| Comparative Example 4 | Resin F | 160 | 30.7 | 31.2 | 385 | 462 | 13.3 | 21 | 0.63 | 12 |
| Comparative Example 5 | Resin G | 150 | 9.4 | 11.2 | 391 | 364 | 8.9 | 19 | 0.47 | 11 |
| *Unit of oxygen permeability: cm$^3\cdot$ mm/m$^2\cdot$ day$\cdot$ atm | | | | | | | | | | |

As is clear from Tables 1 and 2, films of Examples 1 to 5 are a biodegradable film which is excellent in flexibility and oxygen gas barrier property, and has better transparency.

The biodegradable film of the present invention is suitably used in film utilities requiring transparency and gas barrier property in addition to flexibility and heat sealability, for example, trash bags and packaging materials for foods, packaging materials such as merchandises, the content of which must be confirmed, and wrapping materials for preventing and suppressing diffusion of aromatic components and, since they are degraded and vanished in under natural environment such as in soils after use, they can be suitably used as one solution for environmental pollution due to plastic waste.

This application is based on Japanese Patent application serial no.2004-37559 filed with Japan Patent Office on February 16, 2004, the contents of which are hereby incorporated by reference.

Although the present invention has been fully described by way of example, it is to be understood that various changes and modifications will be apparent to those skilled in the art, therefore, unless otherwise such changes and modifications depart from the scope of the present invention hereinafter defined, they should be construed as being included therein.

## Claims

1. A transparent biodegradable film obtained from a resin component containing a polyethylene succinate-based polymer as an essential component, wherein
   a ratio of the polyethylene succinate-based polymer occupied in the resin composition is 30 to 100% by mass, and
   a relationship between a haze value and a film thickness satisfies the following inequality (1).

$$H/T < 0.55 \ldots (1)$$

   H: haze value (%), T film thickness ($\mu$m)

2. The biodegradable film according to claim 1, wherein
   a weight-average molecular weight of the polyethylene succinate-based polymer is 180000 to 400000.

3. A process for producing a transparent biodegradable film, comprising:

   forming a resin composition containing 30 to 100% by mass of a polyethylene succinate-based polymer into a film at a molding temperature of 140°C to 200°C by an inflation method.

4. The process for producing a biodegradable film according to claim 3, wherein
   the polyethylene succinate-based polymer is obtained by polycondensing a polybasic acid or an ester thereof with glycol.

## Patentansprüche

1. Transparente bioabbaubare Folie, erhalten von einer Harzkomponente, enthaltend ein Polymer auf Basis von Polyethylen-Succinat als eine wesentliche Komponente, wobei
   ein Verhältnis des Polymers auf Basis von Polyethylen-Succinat, welches in der Harzzusammensetzung eingenommen ist, 30 bis 100 Massenprozent beträgt, und
   eine Beziehung zwischen einem Trübungswert und einer Foliendicke die folgende Ungleichung (1) erfüllt:

$$H/T < 0.55 \qquad (1)$$

   H: Trübungswert (%), T: Foliendicke ($\mu$m)

2. Bioabbaubare Folie nach Anspruch 1, wobei ein gewichtsgemitteltes Molekulargewicht des Polymers auf Basis von Polyethylen-Succinat 180000 bis 400000 beträgt.

**3.** Verfahren zur Herstellung einer transparenten bioabbaubaren Folie, umfassend:

Das Formen einer Harzzusammensetzung, enthaltend 30 bis 100 Massenprozent eines Polymers auf Basis von Polyethylen-Succinat, in eine Folie bei einer Formtemperatur von 140°C bis 200°C durch ein Aufblasverfahren.

**4.** Verfahren zur Herstellung einer bioabbaubaren Folie nach Anspruch 3, wobei das Polymer auf Basis von Polyethylen-Succinat durch Polykondensation einer mehrbasigen Säure oder eines Esters davon mit Glycol erhalten wird.

**Revendications**

**1.** Film transparent biodégradable obtenu à partir d'un composant résine contenant un polymère à base de polyéthylène succinate en tant que composant essentiel, dans lequel
un taux du polymère à base de polyéthylène succinate occupé dans la composition de résine est de 30 à 100 % en masse, et
une relation entre une valeur de turbidité et une épaisseur de film satisfait à l'inéquation (1) suivante.

$$H/T < 0{,}55 \quad \ldots (1)$$

H : haze value (valeur de turbidité) (%),
T : film thickness (épaisseur de film) ($\mu$m).

**2.** Film biodégradable selon la revendication 1, dans lequel une masse moléculaire moyenne en poids du polymère à base de polyéthylène succinate est de 180000 à 400000.

**3.** Processus de production d'un film transparent biodégradable, comprenant de :

mettre une composition de résine contenant de 30 à 100 % en masse d'un polymère à base de polyéthylène succinate sous la forme d'un film à une température de moulage de 140°C à 200°C par un procédé de gonflage.

**4.** Processus de production d'un film biodégradable selon la revendication 3, dans lequel
on obtient le polymère à base de polyéthylène succinate en polycondensant un acide polybasique ou un ester de celui-ci avec du glycol.